Europäisches Patentamt

European Patent Office

Office européen des brevets

(19)

(11) Veröffentlichungsnummer: **0 288 718**
**B1**

# (12) EUROPÄISCHE PATENTSCHRIFT

(45) Veröffentlichungstag der Patentschrift:
16.05.90

(51) Int. Cl.⁵: **F16D 23/06**

(21) Anmeldenummer: 88104219.6

(22) Anmeldetag: 17.03.88

(54) Synchronisiereinrichtung für Wechselgetriebe, insbesondere für Kraftfahrzeuge.

(30) Priorität: 29.04.87 DE 3714190

(43) Veröffentlichungstag der Anmeldung:
02.11.88 Patentblatt 88/44

(45) Bekanntmachung des Hinweises auf die Patenterteilung:
16.05.90 Patentblatt 90/20

(84) Benannte Vertragsstaaten:
DE FR GB

(56) Entgegenhaltungen:
EP-A- 0 005 645
EP-A- 0 100 025
EP-A- 0 195 706

(73) Patentinhaber: FORD-WERKE AKTIENGESELLSCHAFT,
Werk Köln-Niehl Henry-Ford-Strasse Postfach 60 40 02,
D-5000 Köln 60(DE)

(84) Benannte Vertragsstaaten: DE

(73) Patentinhaber: FORD MOTOR COMPANY LIMITED,
Eagle Way, Brentwood Essex CM13 3BW(GB)

(84) Benannte Vertragsstaaten: GB

(73) Patentinhaber: FORD FRANCE SOCIETE ANONYME,
344 Avenue Napoléon Bonaparte B.P. 307, F-92506 Rueil
Malmaison Cedex(FR)

(84) Benannte Vertragsstaaten: FR

(72) Erfinder: Fitzner, Harald, Am Eichelberg 12,
D-5000 Köln 71(DE)
Erfinder: Seidler, Michael, Vinzenzstrasse 66,
D-5303 Bornheim(DE)

(74) Vertreter: Ritzkowsky, Harald, Dipl.-Ing., Ford-Werke
Aktiengesellschaft Patentabteilung NH/DRP
Henry-Ford-Strasse, D-5000 Köln 60(DE)

**Beschreibung**

Die Erfindung bezieht sich auf eine Synchronisiereinrichtung für Wechselgetriebe, insbesondere für Kraftfahrzeuge, der im Oberbegriff des Patentanspruches erläuterten Art.

Aus der EP-A 0 195 706 ist eine Synchronisiereinrichtung für Wechselgetriebe, insbesondere für Kraftfahrzeuge bekannt, bei der eine auf der Außenverzahnung einer Kupplungsnabe über ihre Innenverzahnung verschiebbare Schaltmuffe mit ihren Enden unter Mitwirkung von Sperrsynchronringen mit an benachbarten, freilaufenden Zahnrädern vorgesehenen Kupplungszähnen in Eingriff bringbar ist und wobei an den Enden der Innenzähne der Schaltmuffe an den Seitenflanken Ausnehmungen vorgesehen sind, die mit den Seitenflanken der Kupplungszähne der Zahnräder zusammenwirken um bei einer Drehmomentübertragung eine selbsttätige Axialbewegung der Schaltmuffe zu verhindern.

Diese bekannte Synchronisiereinrichtung weist eine Schaltmuffe auf, die an ihren Innenzähnen unterschiedlich ausgebildete Gruppen von Zähnen aufweist. So sind einander gegenüberliegende Seitenflanken der Innenzähne mit einer größeren Zahnbreite versehen um ein von Verhaken freies Führen der Schaltmuffe auf ihrer Kupplungsnabe sicherzustellen.

Diese Verbesserung der Führung der Schaltmuffe wurde jedoch nicht auf die mit ihr zusammenwirkenden Sperrsynchronringe ausgedehnt.

Daher tritt bei dieser Synchronisiereinrichtung ein Schaltproblem in der Form auf, daß während einer Einschaltbewegung der Schaltmuffe nach Abschluß der Hauptsynchronisierung sich die Sperrzähne des Sperrsynchronringes in den Ausnehmungen an den Seitenflanken der Innenzähne der Schaltmuffe verhaken und hierdurch der Sperrsynchronring nochmals gegen den Synchronkonus am Zahnrad gedrückt wird. Dadurch wird ein glattes Durchschalten der Synchronisiereinrichtung beeinträchtigt und es entsteht ein zusätzlicher Verschleiß an den Sperrzähnen des Sperrsynchronringes und an den Ausnehmungen der Innenverzahnung der Schaltmuffe.

Die Aufgabe der Erfindung ist es, eine Synchronisiereinrichtung für Wechselgetriebe, insbesondere für Kraftfahrzeuge, der im Oberbegriff des Patentanspruches erläuterten Art zu schaffen, bei der ein störungsfreier, geradliniger Schaltablauf erzielt wird, der frei von Verhakungen ist und der Verschleiß an der Synchronisiereinrichtung verringern hilft.

Gemäß der Erfindung wird diese Aufgabe gelöst, indem bei einer Synchronisiereinrichtung für Wechselgetriebe, insbesondere für Kraftfahrzeuge, der im Oberbegriff des Patentanspruches erläuterten Art, die im Kennzeichenteil des Patentanspruches aufgezeigten Merkmale vorgesehen werden.

Dadurch, daß die Schaltmuffe an einigen Stellen Zahnlücken mit größerer Zahnnuttiefe aufweisen, die an einander gegenüberliegenden Seitenflanken im Bereich der vergrößerten Zahnnuttiefe keine Ausnehmungen aufweisen und mit in ihrer Zahnhöhe vergrößerten Sperrzähnen des Sperrsynchroniinges zusammenwirken, wird eine glatte Führung für den Sperrsynchronring sichergestellt, die ein Einfallen der Sperrzähne in die Ausnehmungen der Innenzähne der Schaltmuffe, die für das Zusammenwirken mit den Kupplungszähnen an den Zahnrädern vorgesehen sind, vermeidet.

Die Erfindung wird anhand des in der beiliegenden Zeichnung gezeigten Ausführungsbeispieles näher erläutert. Es zeigt:

Fig. 1 eine Teilansicht einer Synchronisiereinrichtung bekannten Ausführung von der Seite des Synchronringes gesehen und

Fig. 2 eine Ansicht einer Synchronisiereinrichtung gemäß der Erfindung von der Seite des Synchronringes gesehen.

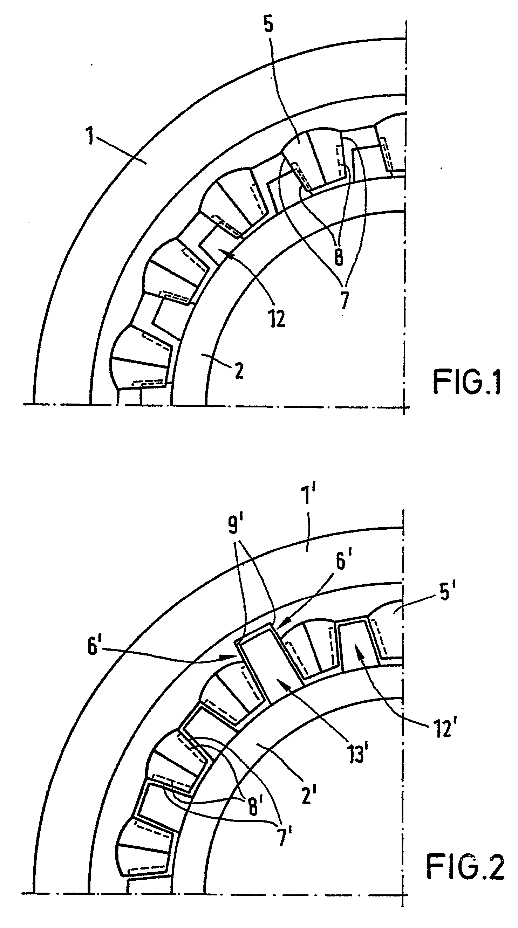

Bei der in Fig. 1 gezeigten bekannten Synchronisiereinrichtung wirkt eine Schaltmuffe 1 mit einem Sperrsynchronring 2 zusammen die beide mit einer Kupplungsverzahnung an einem benachbarten Zahnrad zusammenwirken.

die Schaltmuffe 1 weist hierbei eine Innenverzahnung auf, die mit einer einheitlichen Gruppe von Zähnen 5 versehen ist, die an beiden Seitenflanken 7 mit Ausnehmungen 8 versehen sind.

Die Kupplungsverzahnung am Zahnrad weist Kupplungszähne auf, die einen Hinterschnitt besitzen, mit dem sie mit den Ausnehmungen 8 an den Haltezähnen 5 der Schaltmuffe 1 zusammenwirken um bei einer Drehmomentübertragung eine selbsttätige Axialbewegung der Schaltmuffe 1 zu verhindern.

Der Sperrsynchronring 2 weist eine Vielzahl von gleichförmigen Sperrzähnen 12 auf, die in ihrer Breite im wesentlichen den Kupplungszähnen am Zahnrad entsprechen.

Bei der bekannten Synchronisiereinrichtung können unerwünschte Gangspringer zwar vermieden werden, während einer Schaltbewegung fällt jedoch der Sperrsynchronring in die Ausnehmungen an den Zähnen der Schaltmuffe ein und beeinträchtigt einen geradlinigen Schaltverlauf.

Bei der in Fig. 2 gezeigten erfindungsgemäßen Synchronisiereinrichtung wirkt eine Schaltmuffe 1' über einen Sperrsynchronring 2' mit einer Kupplungsverzahnung an einem benachbarten Zahnrad zusammmen.

Die Schaltmuffe 1' weist hierbei eine Innenverzahnung auf, die mit unterschiedlichen Gruppen von Zähnen 5' und 6' versehen ist, von denen die eine Gruppe von Haltezähnen 5' an beiden Seitenflanken 7' Ausnehmungen 8' und die andere Gruppe von Führungszähnen 6' an einander gegenüberliegenden Seitenflanken 9' im Bereich einer vergrößerten Zahnnuttiefe keine Ausnehmungen aufweisen. Die Kupplungsverzahnung am Zahnrad weist Kupplungszähne auf, die einen Hinterschnitt besitzen, mittels dem sie mit den Ausnehmungen 8' an den Haltezähnen 5' und 6' der Schaltmuffe 1' zusammenwirken um bei einer Drehmomentübertragung eine selbsttätige Axialbewegung der Schaltmuffe 1' zu verhindern.

Der Sperrsynchronring 2' weist eine Vielzahl von Sperrzähnen 12' mit einer normalen Zahnhöhe auf sowie zumindest an drei Stellen Sperrzähne 13', die in ihrer Zahnhöhe vergrößert sind.

Die im Kopfbereich der drei Sperrzähne 13' liegenden Bereiche wirken hierbei mit den Bereichen 9' an den in ihrer Zahnnuttiefe vergrößerten Führungszähnen 6' derart zusammen, daß nach erfolgter Hauptsynchronisierung ein Verhaken der Sperrzähne 12' des Sperrsynchronringes 2' in den Ausnehmungen 8' der Schaltmuffe 1' vermieden wird.

## Patentansprüche

Synchronisiereinrichtung für Wechselgetriebe, insbesondere für Kraftfahrzeuge, mit einer auf der Außenverzahnung einer Kupplungsnabe über ihre Innenverzahnung verschiebbaren Schaltmuffe (1'), deren Enden unter Mitwirkung von Sperrsynchronringen (2') mit an benachbarten, freilaufenden Zahnrädern vorgesehenen Kupplungszähnen in Eingriff bringbar sind und wobei an den Enden der Innenzähne (5') der Schaltmuffe (1') an den Seitenflanken Ausnehmungen (8') vorgesehen sind, die mit den Seitenflanken der Kupplungszähne der Zahnräder zusammenwirken um bei einer Drehmomentübertragung eine selbsttätige Axialbewegung der Schaltmuffe (1') zu verhindern und wobei die Schaltmuffe (1') an ihren Innenzähnen (5') unterschiedlich ausgebildete Gruppen von Zähnen (5' und 6') aufweist, dadurch gekennzeichnet, daß die Schaltmuffe (1') an einigen Stellen Zahnlücken mit gegenüber den übrigen Zahnlücken größerer Zahnnuttiefe aufweist, die an einander gegenüberliegenden Seitenflanken (9') im Bereich der vergrößerten Zahnnuttiefe keine Ausnehmungen aufweisen und mit in ihrer Zahnhöhe vergrößerten Sperrzähnen (13') des Sperrsynchronringes (2') zusammenwirken.

## Claims

A synchronizing device for change-speed transmissions, in particular for motor vehicles, with a gearshift sleeve (1') which is displaceable on the external toothing of a clutch hub by way of its internal toothing and the ends of which are engageable with the cooperation of locking synchronization rings (2') with clutch teeth provided on adjacent freewheeling gearwheels, the ends of the internal teeth (5') of the gearshift sleeve (1') being provided on their lateral flanks with recesses (8') which cooperate with the lateral flanks of the clutch teeth of the gearwheels in order to prevent an automatic axial movement of the gearshift sleeve (1') during a transmission of torque, and the gearshift sleeve (1') being provided on its internal teeth (5') with differently constructed groups of teeth (5' and 6'), characterized in that the gearshift sleeve (1') is provided at some points with tooth spaces with a tooth depth larger than the other tooth spaces, the said tooth spaces being provided on mutually opposite lateral flanks (9') in the region of the enlarged tooth depth with no recesses and cooperating with locking teeth (13') of the locking synchronization ring (2') enlarged in their height.

## Revendications

Dispositif de synchronisation pour boîte de vitesse, en particulier pour automobiles, équipé d'un manchon de changement de vitesse (1'), coulissant sur la denture extérieure d'un moyeu d'accouplement par l'intermédiaire de sa denture intérieure, dont les extrémités peuvent être mises en prise avec coopération de bagues synchrones de blocage (2') avec des dents d'accouplement prévues sur des pignons tournant fous, voisins et en ce que sur les extrémités des dents internes (5') du manchon de changement de vitesse (1') des évidements (8') sont prévus sur les flancs latéraux qui coopèrent avec les flancs latéraux des dents d'accouplement des pignons afin d'empêcher, dans le cas d'une transmission de moment de rotation, un mouvement axial spontané du manchon de changement de vitesse (1') et en ce que le manchon de changement de vitesse (1') comporte sur ses dents internes (5') des groupes de dents (5' et 6') réalisés différemment, caractérisé en ce que le manchon de changement de vitesse (1') comporte par endroits des interruptions de dents avec une profondeur de gorge de dent accrue par rapport aux autres interruptions de dents, qui ne présentent sur des flancs latéraux en vis-à-vis (9') dans la zone de la profondeur de gorges de dents accrue aucun évidement et coopèrent avec des dents de blocage (13') de hauteur de dent accrue de la bague synchrone de blocage (2').

EP 0 288 718 B1

FIG.1

FIG.2